# FASCICULE DE BREVET EUROPEEN

(11) **EP 2 128 003 B1**
(45) Date de publication et mention de la délivrance du brevet: **17.11.2010**
(21) Numéro de dépôt: 09160700.2
(22) Date de dépôt: 19.05.2009
(51) Int. Cl.: B62D 25/16

(54) **Dispositif pour améliorer la rigidité et la résistance au choc d'une aile avant de véhicule automobile.**
Vorrichtung zur Verbesserung der Steifheit und Schlagfestigkeit eines Vorderkotflügels für ein Fahrzeug
Device for improving the stiffness and the impact strength of a vehicle front fender

(30) Priorité: 28.05.2008 FR 0853462
(43) Date de publication de la demande: 02.12.2009
(73) Titulaire: PEUGEOT CITROËN AUTOMOBILES S.A., 78140 Vélizy Villacoublay (FR)
(72) Inventeur: Benane, Saïd, 94550, CHEVILLY LARUE (FR)
(74) Mandataire: Fernandez, Francis Lionel

(56) Documents cités:
- FR-A- 2 784 955
- JP-A- 2000 006 847
- US-A1- 2006 001 293

## Description

La présente invention concerne un dispositif pour améliorer la rigidité et la résistance au choc d'une aile avant de véhicule automobile. Elle concerne aussi un véhicule automobile dont les ailes avant sont équipées d'un tel dispositif.

Dans le domaine de la sécurité des véhicules automobiles, on réalise des essais de chocs, notamment des essais de chocs frontaux à basse vitesse contre des murs. Les dégâts occasionnés par les chocs se situent non seulement sur le pare-chocs et l'aile du véhicule, mais peuvent aussi atteindre la porte du véhicule : le mur vient impacter l'optique et le pare-chocs, lesquels viennent charger l'aile en partie avant, ce qui entraîne un recul de l'aile de l'ordre de 20 mm et ce recul a des conséquences dommageables en termes de classe d'assurance sur la porte du véhicule.

Il y a donc nécessité de réduire substantiellement le recul de l'aile pour ne pas impacter la porte.

Des solutions techniques ont déjà été envisagées pour améliorer la rigidité d'une aile de véhicule.

A titre d'exemple, le document FR 2 784 955 décrit un dispositif de fixation d'une aile sur une caisse de véhicule. Ce dispositif comporte au moins une partie en extension, qui est située sur l'aile ou sur la caisse du véhicule et qui est destinée à être engagée dans un logement situé respectivement sur la caisse du véhicule ou sur l'aile. Cette partie en extension et son logement sont pourvus de moyens d'accrochage complémentaires, qui assurent le maintien de l'aile sur la caisse. La partie en extension et/ou le corps du logement sont constitués d'un matériau fusible sous un effort d'intensité déterminé. Des moyens de positionnement sont prévus pour bloquer la partie en extension dans son logement dans une position déterminée en profondeur.

A titre d'exemple également, le document US 2006/0001293 A1, suivant les caractéristiques du préambule de la revendication 1, décrit une structure d'aile avant de véhicule automobile, qui a pour fonction de garantir une certaine rigidité de surface de la partie supérieure d'un bord de passage de roue approximativement plat et de grande surface lorsque la tôle du panneau d'aile est choisie plus mince. Cette structure d'aile avant comporte :
- une extension d'un boîtier de renforcement qui s'étend à partir de ce boîtier, dirigée verticalement entre une doublure d'aile et un panneau externe pour former un pied-droit avant vers la partie supérieure d'un bord de passage de roue de l'aile, et
- une partie de renfort de surface de panneau d'aile, qui est située sur l'extension de boîtier le long de la surface interne du panneau d'aile.

Le but de la présente invention est de fournir un dispositif pour améliorer la rigidité et la résistance au choc d'une aile avant de véhicule automobile, de telle sorte qu'en cas de choc le recul d'aile soit suffisamment limité pour éviter les conséquences évoquées précédemment sur la porte du véhicule.

C'est également un but de la présente invention de fournir un tel dispositif, qui soit de conception simple et de réalisation aisée, et qui soit économique.

Pour parvenir à ces buts, la présente invention a pour objet un dispositif pour améliorer la rigidité et la résistance au choc d'une aile avant de véhicule automobile, qui est constitué par une entretoise fixée, d'une part, à l'aile avant et au pare-boue du véhicule et, d'autre part, au côté d'habitacle du véhicule, de façon à permettre une plus grande résistance au choc de l'aile avant et protéger la porte du véhicule.

Selon le mode préféré de réalisation de l'invention, l'entretoise est fixée à l'aile avant et au pare-boue du véhicule en zone arrière dudit pare-boue du véhicule.

Selon le mode préféré de réalisation de l'invention également, l'entretoise est fixée à l'aile avant et au pare-boue par le moyen d'une patte extérieure de l'aile avant, dirigée vers l'intérieur du véhicule.

La patte extérieure est, de préférence, de forme sensiblement rectangulaire avec une ouverture, sensiblement centrale, pour le passage d'un moyen de fixation de type connu en soi.

Cette patte de fixation peut être, à titre d'exemple, de largeur voisine de 20 mm et de longueur voisine de 26 mm.

Selon le mode préféré de réalisation de l'invention encore, l'entretoise est fixée au côté d'habitacle par des fixations sur le pied avant de véhicule.

Ces fixations sur le pied avant de véhicule sont, de préférence, au nombre de deux et traversent des orifices de fixation prévus dans la paroi de l'entretoise.

De manière préférentielle, l'entretoise présente une forme tubulaire de section sensiblement rectangulaire, adaptée aux surfaces des pièces que l'entretoise vient relier.

A titre d'exemple non limitatif de l'objet et de la portée de la présente invention, la longueur de l'entretoise peut être de l'ordre de 130 mm, sa section peut présenter une largeur de l'ordre de 30 mm et l'épaisseur de la plaque qui la constitue peut être de l'ordre de 3 mm.

L'invention a également pour objet un véhicule automobile, dans lequel chaque aile avant est équipée d'un dispositif pour améliorer la rigidité et la résistance au choc de l'aile, lequel dispositif est conforme à celui décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 illustre, de manière schématique, les dégâts occasionnés en fin d'essai de choc basse vitesse sur l'aile avant et la porte du véhicule, selon l'art antérieur,
- la figure 2 représente, de manière schématique, le gonflement de l'aile avant en fin du choc représenté sur la figure 1,
- la figure 3 représente, de manière schématique, le moyen de fixation du dispositif de l'invention sur l'aile avant du véhicule,
- la figure 4 est une vue agrandie du moyen de fixation de la figure 3,
- la figure 5 représente, de manière schématique, le moyen de fixation du dispositif de l'invention sur le côté d'habitacle du véhicule,
- la figure 6 est un schéma de principe de la fixation du dispositif de l'invention,
- la figure 7 est une vue en perspective du dispositif de l'invention, et
- la figure 8 représente, de manière schématique, l'aile avant équipée du dispositif de l'invention et la porte du véhicule en fin d'essai de choc.

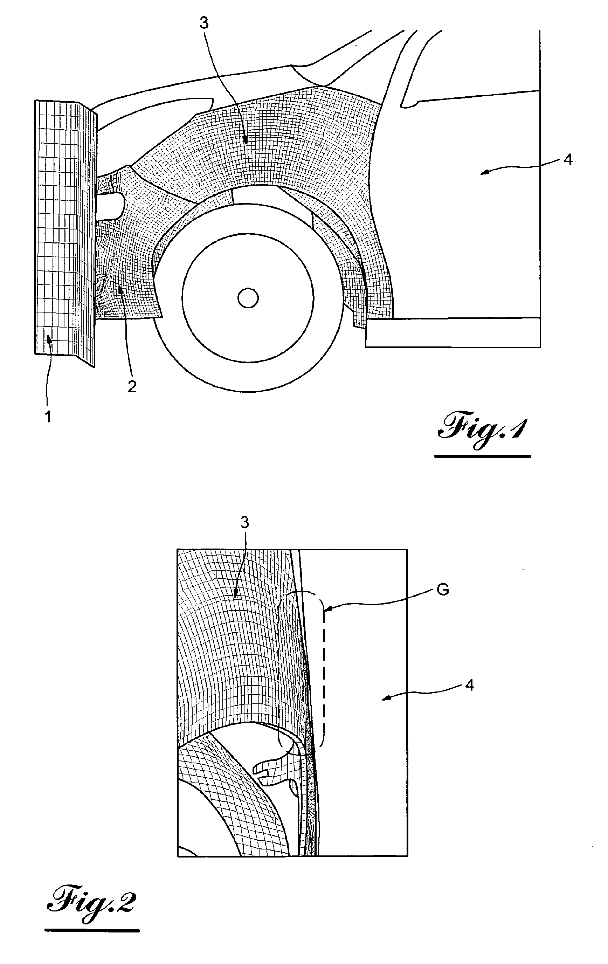

Comme déjà évoqué précédemment, dans un essai normé de choc à basse vitesse contre un mur, par exemple un choc à 16 Km/h contre un mur rigide incliné à 10° à 40% de recouvrement, les dégâts occasionnés se situent non seulement au niveau du pare-chocs et l'aile avant, mais atteignent aussi la porte du véhicule. Le résultat en fin de choc est illustré sur la figure 1. Le mur 1 vient impacter l'optique et le pare-chocs 2, lesquels viennent charger l'aile 3 en partie avant, ce qui entraîne un recul de l'aile 3 de l'ordre de 20 mm. Ce recul provoque des dégâts en termes de classe d'assurance sur la porte 4 du véhicule.

La figure 2 représente, de manière schématique, le gonflement de l'aile 3 en fin du choc, parce qu'elle est fixée, en zone arrière, par deux pattes de fixation sur le pied avant du véhicule. La zone de gonflement de l'aile est la zone désignée par la référence G.

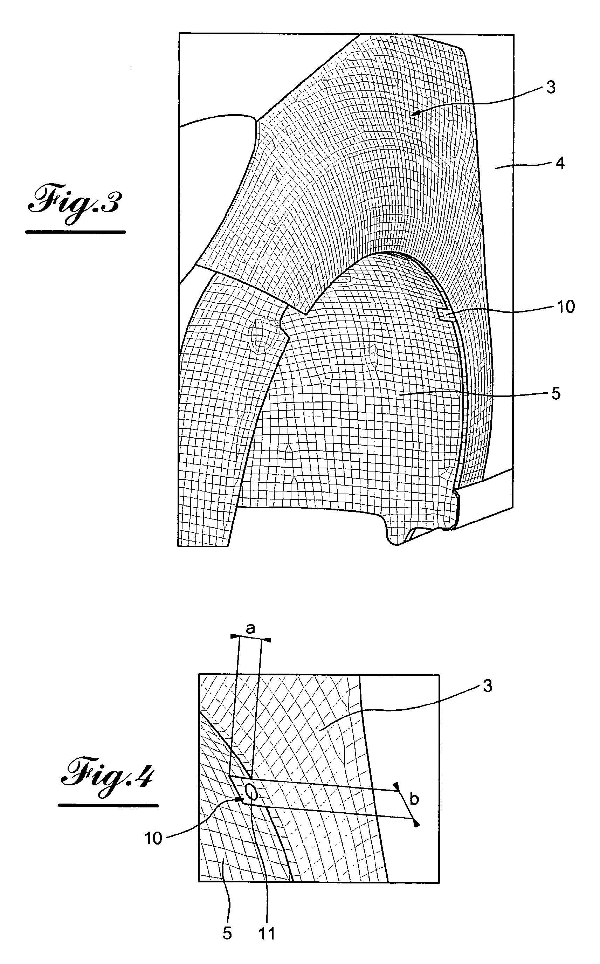

Conformément à l'invention et tel que représenté sur les figures 3 et 4, l'aile avant 3 est munie d'une patte extérieure 10, de forme sensiblement rectangulaire avec un orifice 11 de fixation sensiblement central pour le passage d'un moyen de fixation de type connu en soi, tel une vis par exemple. Sur cette patte extérieure de fixation 10 vient se fixer le pare-boue 5 et une entretoise 20 décrite plus en détail dans la suite du texte.

A titre d'exemple de réalisation non limitatif de la portée et de l'objet de l'invention, cette patte de fixation 10 est intégrée à l'aile avant 3 et ses dimensions sont les suivantes : largeur « a » de 20 mm et longueur « b » de 26 mm.

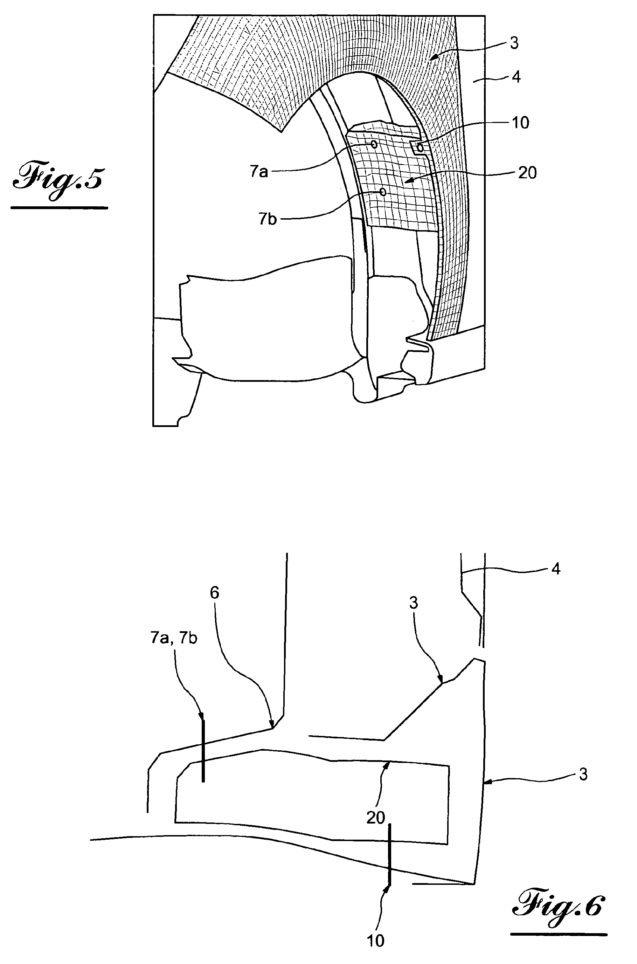

En référence à la figure 5, l'entretoise 20 est fixée sur le pied avant 6 de véhicule, par l'intermédiaire de deux fixations qui traversent deux orifices de fixation référencés 7a et 7b. Ces fixations sont des fixations classiques, connues en soi, par exemple des vis de fixation ou analogues.

Le schéma de la figure 6 montre le principe de configuration des moyens de fixation de l'entretoise 20 sur la carrosserie du véhicule, à savoir, en partie avant, la patte de fixation 10 de l'entretoise 20 et du pare-boue 5 sur l'aile 3 et, en partie arrière, les fixations qui traversent les orifices 7a et 7b de l'entretoise 20 sur le côté d'habitacle du véhicule.

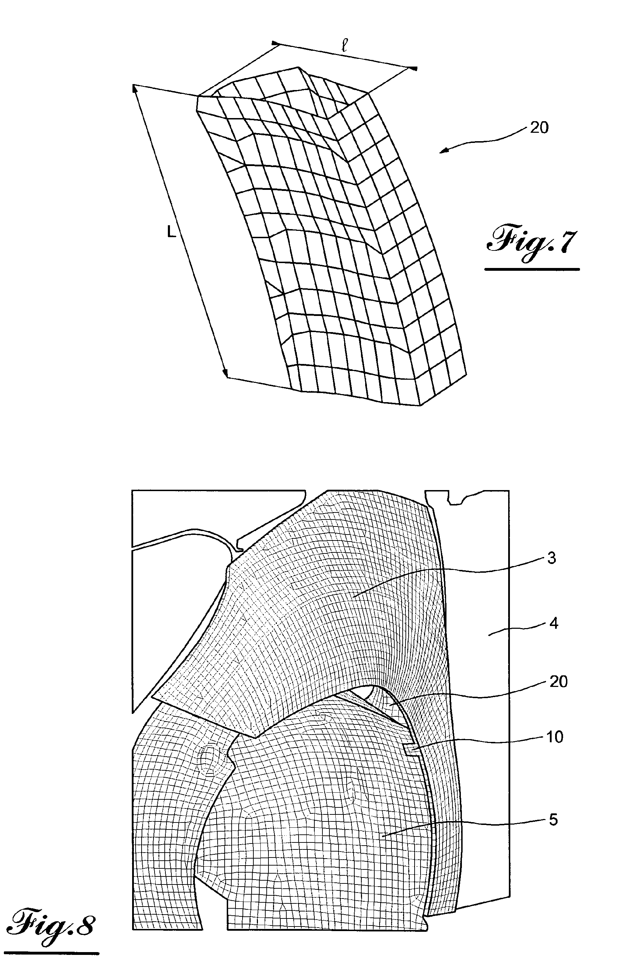

L'entretoise 20 de la présente invention est représentée plus en détail sur la figure 7. Elle présente une forme tubulaire, de section fermée, voisine d'un rectangle, adaptée à la surface des éléments qu'elle vient relier et, par conséquent, à l'environnement de l'aile avant 3, du pare-boue 5 et du côté d'habitacle.

A titre d'exemple non limitatif de la l'objet et de la portée de la présente invention, la longueur L de l'entretoise 20 est de l'ordre de 130 mm et sa section présente une largeur 1 de l'ordre de 30 mm. La plaque constitutive de l'entretoise 20 est une plaque d'épaisseur de l'ordre de 3 mm.

Il va se soi que l'entretoise est réalisée à partir d'un matériau rigide approprié. Elle peut être obtenue, par exemple, à partir d'une tôle d'acier.

La figure 8 représente, de manière schématique, l'aile avant 3 équipée du dispositif de l'invention, à savoir l'entretoise 20, et la porte 4 du véhicule en fin d'essai de choc.

L'invention décrite ci-dessus présente l'avantage de limiter substantiellement l'impact de l'aile avant sur la porte en cas de choc, de permettre une bonne tenue de l'aile avant dans le choc et, par conséquent, d'entraîner un impact minimal au niveau de la porte du véhicule.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Dispositif pour améliorer la rigidité et la résistance au choc d'une aile avant (3) de véhicule automobile, **caractérisé en ce qu'**il est constitué par une entretoise (20) fixée, d'une part, à l'aile avant (3) et au pare-boue (5) du véhicule et, d'autre part, au côté d'habitacle du véhicule, de façon à permettre une plus grande résistance au choc de l'aile avant (3) et protéger la porte (4) du véhicule.

2. Dispositif selon la revendication 1, **caractérisé en ce que** ladite entretoise (20) est fixée à l'aile avant (3) et au pare-boue (5) du véhicule, en zone arrière dudit pare-boue (5) du véhicule.

3. Dispositif selon la revendication 1, **caractérisé en ce que** ladite entretoise (20) est fixée à l'aile avant (3) et au pare-boue (5) par le moyen d'une patte extérieure (10) de l'aile avant (3), dirigée vers l'intérieur du véhicule.

4. Dispositif selon la revendication 3, **caractérisé en ce que** ladite patte extérieure (10) est de forme sensiblement rectangulaire avec une ouverture (11), sensiblement centrale, pour le passage d'un moyen de fixation.

5. Dispositif selon la revendication 4, **caractérisé en ce que** ladite patte de fixation est de largeur (a) voisine de 20 mm et de longueur (b) voisine de 26 mm.

6. Dispositif selon la revendication 1, **caractérisé en ce que** ladite entretoise (20) est fixée au côté d'habitacle par des fixations sur le pied avant (6) de véhicule.

7. Dispositif selon la revendication 6, **caractérisé en ce que** lesdites fixations sont au nombre de deux et traversent des orifices de fixation (7a, 7b) de la paroi de l'entretoise (20).

8. Dispositif selon l'une quelconque des revendications 1 à 7, **caractérisé en ce que** ladite entretoise (20) présente une forme tubulaire de section sensiblement rectangulaire, adaptée aux surfaces des pièces que l'entretoise (20) vient relier.

9. Dispositif selon la revendication 8, **caractérisé en ce que** la longueur (L) de l'entretoise (20) est de l'ordre de 130 mm.

10. Dispositif selon l'une quelconque des revendications 8 et 9, **caractérisé en ce que** la section de l'entretoise (20) présente une largeur (1) de l'ordre de 30 mm.

11. Dispositif selon l'une quelconque des revendications 8 à 10, **caractérisé en ce que** la plaque constitutive de l'entretoise (20) est une plaque de d'épaisseur de l'ordre de 3 mm.

12. Véhicule automobile comportant deux ailes avant montées sur la structure du véhicule, **caractérisé en ce que** chaque aile avant (3) est équipée d'un dispositif pour améliorer la rigidité et la résistance au choc de l'aile, lequel dispositif est conforme au dispositif selon l'une quelconque des revendications 1 à 11.

## Claims

1. Device for improving the rigidity and the resistance to shock of a motor vehicle front wing (3), **characterized in that** the device is constituted of a brace (20) attached, on one hand, to the front wing (3) and to the mudguard (5) of the vehicle and, on the other hand, to the passenger compartment, so as to increase the resistance to shock of the front wing (3) and to protect the door (4) of the vehicle.

2. Device according to claim 1, **characterized in that** said brace (20) is attached to the front wing (3) and to the mudguard (5) of the vehicle, at the rear area of said mudguard (5) of the vehicle.

3. Device according to claim 1, **characterized in that** said brace (20) is attached to the front wing (3) and to the mudguard (5) by means of an external tab (10) of the front wing (3), directed towards the inside of the vehicle.

4. Device according to claim 3, **characterized in that** said external tab (10) has a substantially rectangular shape with a substantially central opening (11) to allow the crossing through of a means of attachment.

5. Device according to claim 4, **characterized in that** said attachment tab has a width (a) close to 20 mm and a length (b) close to 26 mm.

6. Device according to claim 1, **characterized in that** said brace (20) is attached to the side of the passenger compartment via attachments on the front pillar (6) of the vehicle.

7. Device according to claim 6, **characterized in that** said attachments are two in number and pass through the attachment holes (7a, 7b) of the wall of the brace.

8. Device according to any of the claims 1 to 7, **characterized in that** said brace (20) has a tubular shape with a substantially rectangular cross section, matched to the areas of the parts linked by the brace (20).

9. Device according to claim 8, **characterized in that** the length (L) of the brace (20) is of the order of 130 mm.

10. Device according to any of the claims 8 and 9, **characterized in that** the cross section of the brace (20) has a width (1) of the order of 30 mm.

11. Device according to any of the claims 8 to 10, **characterized in that** the plate comprising the brace (20) is a plate with a thickness of the order of 3 mm.

12. Motor vehicle comprising two front wings mounted on the structure of the vehicle, **characterized in that** each front wing (3) is equipped with a device for improving the rigidity and the resistance to shock of the wing, said device conforming to a device according to any of the claims 1 to 11.

## Patentansprüche

1. Vorrichtung zur Verbesserung der Steifheit und der Stoßfestigkeit eines Vorderkotflügels (3) eines Kraftfahrzeugs, **dadurch gekennzeichnet, dass** sie aus einer Strebe (20) besteht, die einerseits am Vorderkotflügel (3) und am Schmutzfänger (5) des Fahrzeugs und andererseits an der Fahrgastzellenseite des Fahrzeugs befestigt ist, um die Stoßfestigkeit des Vorderkotflügels (3) zu erhöhen und die Tür (4) des Fahrzeugs zu schützen.

2. Vorrichtung nach Anspruch 1, **dadurch gekennzeichnet, dass** die genannte Strebe (20) am Vorderkotflügel (3) und am Schmutzfänger (5) des Fahrzeugs im hinteren Bereich des genannten Schmutzfängers (5) des Fahrzeugs befestigt ist.

3. Vorrichtung nach Anspruch 1, **dadurch gekennzeichnet, dass** die genannte Strebe (20) am Vorderkotflügel (3) und am Schmutzfänger (5) mit Hilfe einer äußeren Lasche (10) des Vorderkotflügels (3) befestigt wird, die zur Innenseite des Fahrzeugs gerichtet ist.

4. Vorrichtung nach Anspruch 3, **dadurch gekennzeichnet, dass** die genannte äußere Lasche (10) eine im Wesentlichen rechteckige Form mit einer im Wesentlichen mittigen Öffnung (11) zum Durchführen eines Befestigungsmittels aufweist.

5. Vorrichtung nach Anspruch 4, **dadurch gekennzeichnet, dass** die genannte Befestigungslasche eine Breite (a) von ungefähr 20 mm und eine Länge (b) von ungefähr 26 mm hat.

6. Vorrichtung nach Anspruch 1, **dadurch gekennzeichnet, dass** die genannte Strebe (20) an der Fahrgastzellenseite mit Befestigungsmitteln an der A-Säule (6) des Fahrzeugs befestigt ist.

7. Vorrichtung nach Anspruch 6, **dadurch gekennzeichnet, dass** die genannten Befestigungsmittel zwei an der Zahl sind und durch Befestigungslöcher (7a, 7b) der Wand der Strebe (20) gehen.

8. Vorrichtung nach einem der Ansprüche 1 bis 7, **dadurch gekennzeichnet, dass** die genannte Strebe (20) eine Röhrenform mit im Wesentlichen rechteckigem Querschnitt aufweist, angepasst an die Oberflächen der Teile, die die Strebe (20) verbindet.

9. Vorrichtung nach Anspruch 8, **dadurch gekennzeichnet, dass** die Länge (L) der Strebe (20) in der Größenordnung von 130 mm liegt.

10. Vorrichtung nach einem der Ansprüche 8 und 9, **dadurch gekennzeichnet, dass** der Querschnitt der Strebe (20) eine Breite (1) in der Größenordnung von 30 mm aufweist.

11. Vorrichtung nach einem der Ansprüche 8 bis 10, **dadurch gekennzeichnet, dass** die Platte, die die Strebe (20) bildet, eine Platte mit einer Dicke in der Größenordnung von 3 mm ist.

12. Kraftfahrzeug mit zwei Vorderkotflügeln, die am Rahmen des Fahrzeugs montiert sind, **dadurch gekennzeichnet, dass** jeder Vorderkotflügel (3) mit einer Vorrichtung zur Verbesserung der Steifheit und der Stoßfestigkeit des Kotflügels ausgestattet ist, wobei die Vorrichtung der Vorrichtung nach einem der Ansprüche 1 bis 11 entspricht.
